# EUROPEAN PATENT APPLICATION

(11) **EP 3 869 586 A1**
(43) Date of publication of application: **25.08.2021**
(21) Application number: 19873222.4
(22) Date of filing: 10.10.2019
(51) Int. Cl.: H01M 4/133, H01M 4/134, H01M 4/36, H01M 4/38, H01M 4/587, H01M 10/052, H01M 10/0566

(54) **NEGATIVE ELECTRODE FOR LITHIUM ION SECONDARY BATTERY, AND LITHIUM ION SECONDARY BATTERY**

(30) Priority: 17.10.2018 JP 2018195504
(71) Applicant: Murata Manufacturing Co., Ltd., Nagaokakyo-shi, Kyoto 617-8555 (JP)
(72) Inventor: NAGATA Yoshihide, Nagaokakyo-shi, Kyoto 617-8555 (JP); KOSHITANI Naoki, Nagaokakyo-shi, Kyoto 617-8555 (JP)
(74) Representative: Witte, Weller & Partner Patentanwälte mbB
(86) International application number: PCT/JP2019/039972
(87) International publication number: WO 2020/080245

(57) **Abstract**

A lithium-ion secondary battery includes a positive electrode, a negative electrode, and an electrolytic solution. The negative electrode includes a negative electrode active material layer having fine pores. The negative electrode active material layer includes first negative electrode active material particles and second negative electrode active material particles. The first negative electrode active material particles each include carbon-containing particles and silicon-containing particles in an ion-conductive material. The second negative electrode active material particles each include a carbon-containing material. A pore size that represents a peak of a volume fraction of an amount of mercury intruded into the fine pores falls within a range of greater than or equal to 1 µm and less than or equal to 3 µm .

## Description

### Technical Field

The technology relates to: a negative electrode to be used in a lithium-ion secondary battery; and a lithium-ion secondary battery that uses the negative electrode.

### Background Art

Various electronic apparatuses such as mobile phones have been widely used. Accordingly, a lithium-ion secondary battery, which is smaller in size and lighter in weight and allows for a higher energy density, is under development as a power source.

Such a lithium-ion secondary battery includes a positive electrode, a negative electrode, and an electrolytic solution. A configuration of the negative electrode greatly influences battery characteristics. Accordingly, various considerations have been given to the configuration of the negative electrode. Specifically, to obtain a characteristic such as a superior cyclability characteristic, a binder, which is a fluorine-based resin, is used together with a negative electrode active material (for example, see PTL 1). The negative electrode active material includes a composite material, a polymer compound having a carboxyl group, and metal oxide particles. The composite material includes a carbon material, a graphite material, and a metal material. The polymer compound and the metal oxide particles are attached to a surface of the composite material.

### Citation List

### Patent Literature

PTL 1: Japanese Unexamined Patent Application Publication No. 2013-157339

### Summary of the Invention

Electronic apparatuses, on which a lithium-ion secondary battery is to be mounted, are increasingly gaining higher performance and more functions, causing more frequent use of the electronic apparatuses and expanding a use environment of the electronic apparatuses. Accordingly, there is still room for improvement in terms of battery characteristics of the lithium-ion secondary battery.

The technology has been made in view of such an issue and it is an object of the technology to provide a negative electrode for a lithium-ion secondary battery, and a lithium-ion secondary battery that each make it possible to achieve a superior battery characteristic.

A negative electrode for a lithium-ion secondary battery according to one embodiment of the technology includes a positive electrode, a negative electrode, and an electrolytic solution. The negative electrode includes a negative electrode active material layer having fine pores. The negative electrode active material layer includes first negative electrode active material particles and second negative electrode active material particles. The first negative electrode active material particles each include carbon-containing particles and silicon-containing particles in an ion-conductive material. The second negative electrode active material particles each include a carbon-containing material. A pore size that represents a peak of a volume fraction of an amount of mercury intruded into the fine pores falls within a range of greater than or equal to 1 µm and less than or equal to 3 µm .

A lithium-ion secondary battery according to one embodiment of the technology includes a positive electrode, a negative electrode, and an electrolytic solution. The negative electrode has a configuration similar to that of the negative electrode for a lithium-ion secondary battery according to the embodiment of the technology described above.

The "volume fraction of the amount of the mercury intruded into the fine pores" described above is measured by a mercury intrusion method (by means of a mercury porosimeter). Note that a value of the amount of the intruded mercury is assumed to be measured under conditions that: a surface tension of the mercury is 485 mN/m; a contact angle of the mercury is 130°; and a relationship between the pore size of the fine pores and pressure is approximated to a relationship in which 180/pressure equals the pore size.

Accordingly, the wording "a pore size that represents a peak of a volume fraction of an amount of mercury intruded into the fine pores falls within a range of greater than or equal to 1 µm and less than or equal to 3 µm" refers to the following. Referring to a result of the measurement, performed by means of the mercury porosimeter, in which a horizontal axis represents a pore size (µm) and a vertical axis represents a volume fraction (%) of an amount of intruded mercury, and focusing on a range where the pore size represented by the horizontal axis is from 1 µm to 3 µm both inclusive, the wording refers to: that a distribution of the volume fraction of the amount of the intruded mercury is represented by a curve (a peak) opening downward; and that a vertex of the peak is located within the range where the pore size is from 1 µm to 3 µm both inclusive.

According to the negative electrode for a lithium-ion secondary battery of the technology, or the lithium-ion secondary battery of the technology, the negative electrode active material layer having the fine pores includes the first negative electrode active material particles and the second negative electrode active material particles described above, and the condition described above in relation to the range of the pore size corresponding to the peak of the volume fraction of the amount of the mercury intruded into the fine pores is satisfied. This makes it possible to achieve a superior battery characteristic.

Note that effects of the technology are not necessarily limited to those described above and may include any of a series of effects described below in relation to the technology.

### Brief Description of Drawings

[FIG. 1] FIG. 1 is a sectional view of a configuration of a negative electrode for a lithium-ion secondary battery according to one embodiment of the technology.
[FIG. 2] FIG. 2 is a schematic sectional view of a configuration of each of a first negative electrode active material particle and a second negative electrode active material particle.
[FIG. 3] FIG. 3 is a diagram illustrating an example of a result of measurement, performed by means of a mercury porosimeter, in which a horizontal axis represents a pore size (%) and a vertical axis represents a volume fraction (%) of an amount of intruded mercury.
[FIG. 4] FIG. 4 is a sectional view of a configuration of a lithium-ion secondary battery (cylindrical type) according to one embodiment of the technology.
[FIG. 5] FIG. 5 is an enlarged sectional view of a configuration of a main part of the lithium-ion secondary battery illustrated in FIG. 4.
[FIG. 6] FIG. 6 is a perspective view of a configuration of another lithium-ion secondary battery (laminated-film type) according to one embodiment of the technology.
[FIG. 7] FIG. 7 is an enlarged sectional view of a configuration of a main part of the lithium-ion secondary battery illustrated in FIG. 6.

### Modes for Carrying Out the Invention

Some embodiments of the technology are described below in detail with reference to the drawings. The description is given in the following order.
1. Negative Electrode for Lithium-ion Secondary Battery
   1-1. Configuration
   1-2. Manufacturing Method
   1-3. Action and Effects
2. Lithium-ion Secondary Battery
   2-1. Cylindrical Type
      2-1-1. Configuration
      2-1-2. Operation
      2-1-3. Manufacturing Method
      2-1-4. Action and Effects
   2-2. Laminated-film Type
      2-2-1. Configuration
      2-2-2. Operation
      2-2-3. Manufacturing Method
      2-2-4. Action and Effects
3. Modifications
4. Applications of Lithium-ion Secondary Battery

### <1. Negative Electrode for Lithium-ion Secondary Battery>

A description is given first of a negative electrode for a lithium-ion secondary battery according to one embodiment of the technology. The negative electrode for a lithium-ion secondary battery according to one embodiment of the technology is hereinafter simply referred to as a "negative electrode".

A lithium-ion secondary battery that is to include the negative electrode described below obtains a battery capacity by utilizing lithium insertion and lithium extraction, as will be described later.

### <1-1. Configuration>

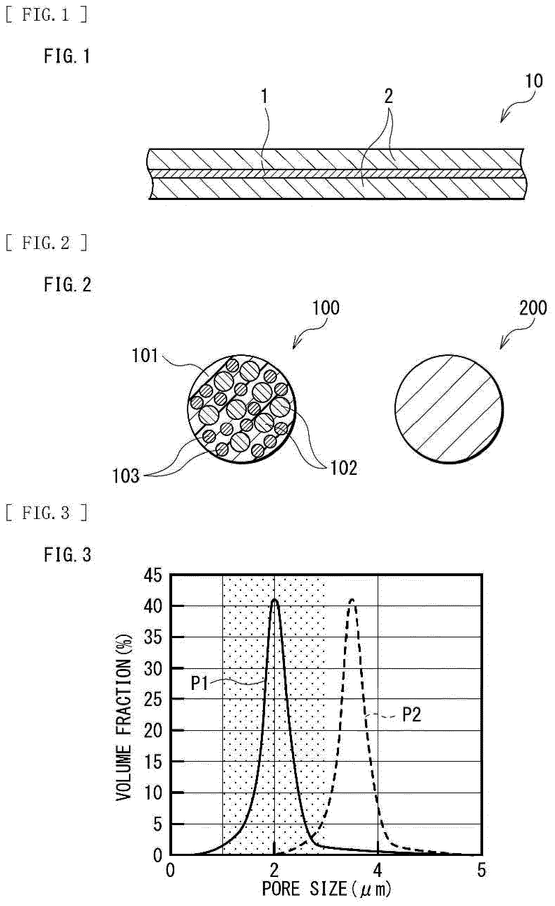

FIG. 1 illustrates a sectional configuration of a negative electrode 10 as an example of the negative electrode. FIG. 2 schematically illustrates a sectional configuration of each of a first negative electrode active material particle 100 and a second negative electrode active material particle 200. FIG. 3 illustrates an example of a result of measurement performed by means of a mercury porosimeter, in which a horizontal axis represents a pore size (%) and a vertical axis represents a volume fraction (%) of an amount of intruded mercury.

Referring to FIG. 1, the negative electrode 10 includes a negative electrode active material layer 2. More specifically, the negative electrode 10 includes, for example, a negative electrode current collector 1, and the negative electrode active material layer 2 described above is provided on the negative electrode current collector 1. The negative electrode active material layer 2 may be provided only on one side of the negative electrode current collector 1, or may be provided on each of both sides of the negative electrode current collector 1. FIG. 1 illustrates a case where the negative electrode active material layer 2 is provided on each of both sides of the negative electrode current collector 1, as an example.

### [Negative Electrode Current Collector]

The negative electrode current collector 1 includes, for example, an electrically conductive material such as copper. It is preferable that the negative electrode current collector 1 have a surface roughened by a method such as an electrolysis method. A reason for this is that improved adherence of the negative electrode active material layer 2 to the negative electrode current collector 1 is achievable by utilizing an anchor effect.

### [Negative Electrode Active Material Layer]

Referring to FIG. 2, the negative electrode active material layer 2 includes two kinds of particulate negative electrode active materials, i.e., first negative electrode active material particles 100 and second negative electrode active material particles 200. This provides the negative electrode active material layer 2 with fine pores (voids). FIG. 2 illustrates only a single first negative electrode active material particle 100 and only a single second negative electrode active material particle 200. Note that the negative electrode active material layer 2 may further include, for example, one or more of other materials including, without limitation, a negative electrode binder and a negative electrode conductor.

### (First Negative Electrode Active Material Particles)

As illustrated in FIG. 2, the first negative electrode active material particles 100 each include carbon-containing particles 102 and silicon-containing particles 103 in an ion-conductive material 101. The carbon-containing particles 102 are particles into which lithium is to be inserted and from which lithium is to be extracted. The silicon-containing particles 103 are particles into which lithium is to be inserted and from which lithium is to be extracted.

That is, the first negative electrode active material particle 100 is a composite particle in which the carbon-containing particles 102 and the silicon-containing particles 103 are included (embedded) in the ion-conductive material 101. Note that, some of the carbon-containing particles 102 may be partially exposed from the ion-conductive material 101. This is similarly applicable to the silicon-containing particles 103. That is, some of the silicon-containing particles 103 may be partially exposed from the ion-conductive material 101.

An average particle size (a median diameter D50) of the first negative electrode active material particles 100 is not particularly limited, and is preferably within a range from 3.5 µm to 13.0 µm both inclusive in particular. A reason for this is that the average particle size of the first negative electrode active material particles 100 is made appropriate in relation to an average particle size (a median diameter D50) of the second negative electrode active material particles 200. This makes it easier to so control the distribution of the fine pores that a predetermined condition is satisfied which is related to the volume fraction of the amount of the mercury intruded into the fine pores in the negative electrode active material layer 2. The predetermined condition will be described later.

### (Ion-conductive Material)

The ion-conductive material 101 improves a lithium-ion conductive property to thereby make it easier for the lithium ions to enter and exit each of the carbon-containing particles 102 and the silicon-containing particles 103.

The ion-conductive material 101 includes, for example, one or more of materials including, without limitation, an ion-conductive polymer compound and a solid electrolyte. A reason for this is that a sufficient ion-conductive property is obtainable inside the first negative electrode active material particle 100. Specific examples of the ion-conductive polymer compound include polyether, polyacrylonitrile, polyvinylidene difluoride, polyvinylidene chloride, polymethyl methacrylate, polymethyl acrylate, polyvinyl alcohol, polyacrylonitrile, polymethacrylonitrile, polyvinyl acetate, polyvinyl pyrrolidone, polyethyleneimine, polybutadiene, polystyrene, polyisoprene, polyaniline, polypyrrole, polythiophene, polyacetylene, polyphenylene, poly(p-phenylene), polyphenylene vinylene, polyoxadiazole, polyhexafluoropropylene, and polyethylene carbonate. Examples of the polyether include polyethylene oxide (PEO) and polypropylene oxide (PPO).

Note that the ion-conductive polymer compound may be, for example, a derivative of the material such as the polyether described above. Further, the ion-conductive polymer compound may be, for example, a homopolymer of the material such as the polyether described above, or may be, for example, a copolymer of any two or more of the materials including, without limitation, the polyether described above. In particular, it is preferable that the ion-conductive polymer compound be polyethylene oxide. A reason for this is that a high ion-conductive property is obtainable.

The ionic conductivity of the ion-conductive material 101 is not particularly limited, and is preferably within a range from 10⁻⁶ S/cm to 10⁻¹ S/cm both inclusive. A reason for this is that it is easier for the lithium ions to enter and exit each of the carbon-containing particles 102 and the silicon-containing particles 103 smoothly and stably.

The content of the ion-conductive material 101 in the first negative electrode active material particle 100 is not particularly limited. It is preferable, in particular, that a proportion (a weight proportion R1) of the weight of the ion-conductive material 101 to the weight of the first negative electrode active material particle 100 be within a range from 1.0 wt% to 2.5 wt% both inclusive. A reason for this is that the amount of the ion-conductive material 101 is made appropriate in relation to each of the amount of the carbon-containing particles 102 and the amount of the silicon-containing particles 103, making it possible to obtain a superior ion-conductive property while securing a high energy density.

### (Carbon-containing Particles)

The carbon-containing particles 102 each include one or more of carbon-containing materials as a negative electrode material or negative electrode materials into which lithium is to be inserted and from which lithium is to be extracted. The term "carbon-containing material" is a generic term for a material that includes carbon as a constituent element. A reason for this is that a high energy density is stably obtainable owing to the crystal structure of the carbon-containing material which hardly varies upon insertion and extraction of lithium. Another reason for this is that an electrically conductive property of the first negative electrode active material particle 100 improves owing to the carbon-containing material which also serves as a negative electrode conductor.

Specifically, examples of the carbon-containing material include graphitizable carbon, non-graphitizable carbon, and graphite. Note that spacing of a (002) plane of the non-graphitizable carbon is, for example, greater than or equal to 0.37 nm, and spacing of a (002) plane of the graphite is, for example, less than or equal to 0.34 nm.

More specific examples of the carbon-containing material include pyrolytic carbons, cokes, glassy carbon fibers, an organic polymer compound fired body, activated carbon, and carbon blacks. Examples of the cokes include pitch coke, needle coke, and petroleum coke. The organic polymer compound fired body is a resultant of firing or carbonizing a polymer compound such as a phenol resin or a furan resin at any temperature. Other than the above, the carbon-containing material may be low-crystalline carbon subjected to heat treatment at a temperature of about 1000°C or lower, or may be amorphous carbon, for example. The carbon-containing material has a shape such as a fibrous shape, a spherical shape, a granular shape, or a scale-like shape.

### (Silicon-containing Particles)

The silicon-containing particles 103 each include one or more of silicon-containing materials as a negative electrode material or negative electrode materials into which lithium is to be inserted and from which lithium is to be extracted. The term "silicon-containing material" is a generic term for a material that includes silicon as a constituent element. A reason for this is that a high energy density is obtainable owing to superior lithium insertability and superior lithium extractability thereof.

The silicon-containing material is able to form an alloy with lithium. The silicon-containing material may be a simple substance of silicon, a silicon alloy, a silicon compound, a mixture of two or more thereof, or a material including one or more phases thereof. The simple substance described here merely refers to a simple substance in a general sense. The simple substance may therefore include a small amount of impurity, that is, does not necessarily have a purity of 100%.

The silicon alloy includes, for example, one or more of elements including, without limitation, tin, nickel, copper, iron, cobalt, manganese, zinc, indium, silver, titanium, germanium, bismuth, antimony, and chromium as a constituent element or constituent elements other than silicon. The silicon compound includes, for example, one or more of elements including, without limitation, carbon and oxygen as a constituent element or constituent elements other than silicon. The silicon compound may include, as a constituent element or constituent elements other than silicon, one or more of the series of constituent elements described in relation to the silicon alloy.

Specifically, examples of the silicon alloy and the silicon compound include SiB₄, SiB₆, Mg₂Si, Ni₂Si, TiSi₂, MoSi₂, CoSi₂, NiSi₂, CaSi₂, CrSi₂, Cu₅Si, FeSi₂, MnSi₂, NbSi₂, TaSi₂, VSi₂, WSi₂, ZnSi₂, SiC, Si₃N₄, Si₂N₂O, and SiOᵥ (where 0 < v ≤ 2). Note, however, that a range of "v" may be 0.2 < v < 1.4, in one example.

A mixture ratio (a weight ratio) between the carbon-containing particles 102 and the silicon-containing particles 103 is not particularly limited. It is preferable, in particular, that a proportion (a weight proportion R2) of the weight of the silicon-containing particles 103 to a sum total of the weight of the carbon-containing particles 102 and the weight of the silicon-containing particles 103 be within a range from 60.6 wt% to 85.9 wt% both inclusive. A reason for this is as follows. The amount of the silicon-containing particles 103 is made appropriate in relation to the amount of the carbon-containing particles 102. This makes it possible to obtain both a high energy density and a superior ion-conductive property while suppressing swelling and contraction of the negative electrode active material layer 2 resulting from the presence of the silicon-containing material. Note that the value of the weight proportion R2 is rounded off to one decimal place.

### (Second Negative Electrode Active Material Particles)

As illustrated in FIG. 2, the second negative electrode active material particles 200 each include one or more of the carbon-containing materials. Details of the carbon-containing materials are as described above. Note that the kind of the carbon-containing material included in the second negative electrode active material particles 200 may be the same as the kind of the carbon-containing material included in the carbon-containing particles 102, or may be different from the kind of the carbon-containing material included in the carbon-containing particles 102.

An average particle size (a median diameter D50) of the second negative electrode active material particles 200 is not particularly limited, and is preferably within a range from 7.0 µm to 20.0 µm both inclusive in particular. A reason for this is that the average particle size of the second negative electrode active material particles 200 is made appropriate in relation to the average particle size (the median diameter D50) of the first negative electrode active material particles 100. This makes it easier to so control the distribution of the fine pores that a predetermined condition is satisfied which is related to the volume fraction of the amount of the mercury intruded into the fine pores in the negative electrode active material layer 2, as described above.

A mixture ratio (a weight ratio) between the first negative electrode active material particles 100 and the second negative electrode active material particles 200 is not particularly limited. It is preferable, in particular, that a proportion (a weight proportion R3) of the weight of the first negative electrode active material particles 100 to a sum total of the weight of the first negative electrode active material particles 100 and the weight of the second negative electrode active material particles 200 be within a range from 10.5 wt% to 42.1 wt% both inclusive. A reason for this is as follows. The amount of the first negative electrode active material particles 100 is made appropriate in relation to the amount of the second negative electrode active material particles 200. This makes it possible to obtain both a high energy density and a superior ion-conductive property while suppressing swelling and contraction of the negative electrode active material layer 2 resulting from the presence of the silicon-containing material. Note that the value of the weight proportion R3 is rounded off to one decimal place.

### (Physical Property of Negative Electrode Active Material Layer)

The fine pores provided in the negative electrode active material layer 2 are so distributed as to satisfy a predetermined condition. Specifically, when measurement is conducted of the volume fraction of the amount of the mercury intruded into the fine pores, the pore size representing the peak of the volume fraction of the amount of the intruded mercury is within a range from 1 µm to 3 µm both inclusive. Hereinafter, the condition described above is referred to as a "pore size condition".

The "volume fraction of the amount of the mercury intruded into the fine pores" is measured by a mercury intrusion method (by means of a mercury porosimeter) as described above. Note that a value of the amount of the intruded mercury is assumed to be measured under conditions that: a surface tension of the mercury is 485 mN/m; a contact angle of the mercury is 130°; and a relationship between the pore size of the fine pores and pressure is approximated to a relationship in which 180/pressure equals the pore size.

Accordingly, the wording "a pore size that represents a peak of a volume fraction of an amount of mercury intruded into the fine pores falls within a range of greater than or equal to 1 µm and less than or equal to 3 µm" refers to the following. Referring to a result of the measurement, performed by means of the mercury porosimeter, in which a horizontal axis represents a pore size (µm) and a vertical axis represents a volume fraction (%) of an amount of intruded mercury, and focusing on a range where the pore size represented by the horizontal axis is from 1 µm to 3 µm both inclusive, the wording refers to: that a distribution of the volume fraction of the amount of the intruded mercury is represented by a curve (a peak) opening downward; and that a vertex of the peak is located within the range where the pore size is from 1 µm to 3 µm both inclusive, as described above.

More specifically, in a case where a peak is detected in the result of the measurement performed by means of the mercury porosimeter, the pore size corresponding to the vertex of the peak is checked. The pore size corresponding to the vertex of the peak is hereinafter also referred to as a "corresponding pore size". In a case where the corresponding pore size is within the range from 1 µm to 3 µm both inclusive, the pore size condition is satisfied. In contrast, in a case where the corresponding pore size is outside the range from 1 µm to 3 µm both inclusive, the pore size condition is not satisfied.

To give an example, assume that the result of the measurement performed by means of the mercury porosimeter is as illustrated in FIG. 3. In this example, in a case where a peak P1 indicated by a solid line is detected, the corresponding pore size is 2 µm. Accordingly, the pore size condition is satisfied. In contrast, in a case where a peak P2 indicated by a broken line is detected, the corresponding pore size is 3.5 µm. Accordingly, the pore size condition is not satisfied. In FIG. 3, the range of the pore size from 1 µm to 3 µm both inclusive is hatched.

A reason why the corresponding pore size is within the range from 1 µm to 3 µm both inclusive is because, in a case where the first negative electrode active material particles 100 each include the ion-conductive material 101, the amount of the voids (the distribution of the voids) in the negative electrode active material layer 2 is made appropriate. Accordingly, the ion-conductive property improves in each of the first negative electrode active material particles 100, and the ion-conductive property also improves in the periphery of each of the first negative electrode active material particles 100, allowing an ion-conductive property to markedly improve in the negative electrode active material layer 2 as a whole. For such a reason, regarding the lithium-ion secondary battery including the negative electrode 10 and the electrolytic solution, ion transport efficiency in the electrolytic solution markedly improves when the negative electrode 10 is impregnated with the electrolytic solution, i.e., when the electrolytic solution enters the fine pores in the negative electrode active material layer 2, thereby making it easier for the lithium ions to enter and exit the negative electrode 10 smoothly and stably.

The corresponding pore size is adjustable to a desired value by changing each of the median diameter D50 of the first negative electrode active material particles 100 and the median diameter D50 of the second negative electrode active material particles 200 described above, i.e., by changing the ratio between the two median diameters D50. A reason for this is that the distribution of the voids in the negative electrode active material layer 2 varies, which varies in turn the position of the peak detected in the result of the measurement performed by means of the mercury porosimeter.

In a case of checking the corresponding pore size, for example, the negative electrode active material layer 2 is cut into a size of 25 mm × 350 mm, and a mercury porosimeter (AutoPore 9500 Series) available from Micromeritics Instrument Corporation is used.

### (Other Negative Electrode Active Materials)

The negative electrode active material layer 2 may further include one or more of other negative electrode active materials together with the two kinds of negative electrode active materials, i.e., the first negative electrode active material particles 100 and the second negative electrode active material particles 200, described above.

Examples of the other negative electrode active materials include a metal-based material. The term "metal-based material" is a generic term for a material that includes one or more of metal elements and metalloid elements, as a constituent element or constituent elements. A reason for this is that a high energy density is obtainable.

The metal-based material may be a simple substance, an alloy, a compound, a mixture of two or more thereof, or a material including one or more phases thereof. Note that the "alloy" encompasses not only a material including two or more metal elements but also a material including one or more metal elements and one or more metalloid elements. The "alloy" may further include one or more non-metallic elements. The metal-based material has a state such as a solid solution, a eutectic (a eutectic mixture), an intermetallic compound, or a state including two or more thereof that coexist.

The metal element and the metalloid element are each able to form an alloy with lithium. Specific examples of the metal element and the metalloid element include magnesium, boron, aluminum, gallium, indium, silicon, germanium, tin, lead, bismuth, cadmium, silver, zinc, hafnium, zirconium, yttrium, palladium, and platinum.

Among the above-described materials, silicon or tin is preferable, and silicon is more preferable. A reason for this is that a markedly high energy density is obtainable owing to superior lithium insertability and superior lithium extractability thereof.

The metal-based material may specifically be a simple substance of silicon, a silicon alloy, a silicon compound, a simple substance of tin, a tin alloy, a tin compound, a mixture of two or more thereof, or a material including one or more phases thereof.

Details of each of the silicon alloy and the silicon compound are as described above. The tin alloy includes, for example, one or more of elements including, without limitation, silicon, nickel, copper, iron, cobalt, manganese, zinc, indium, silver, titanium, germanium, bismuth, antimony, and chromium as a constituent element or constituent elements other than tin. The tin compound includes one or more of elements including, without limitation, carbon and oxygen as a constituent element or constituent elements other than tin. The tin compound may include, as a constituent element or constituent elements other than tin, one or more of the series of constituent elements described in relation to the tin alloy, for example. Specifically, examples of the tin alloy and the tin compound include SnO_{w} (where 0 < w ≤ 2), SnSiO₃, and Mg₂Sn.

### (Negative Electrode Binder and Negative Electrode Conductor]

The negative electrode binder includes, for example, materials including, without limitation, a synthetic rubber and a polymer compound. Examples of the synthetic rubber include a styrene-butadiene-based rubber. Examples of the polymer compound include polyvinylidene difluoride, polyimide, and aramid.

The negative electrode conductor includes, for example, an electrically conductive material such as a carbon material. Examples of the carbon material include graphite, carbon black, acetylene black, Ketjen black, carbon nanotubes, and carbon nanofibers. The negative electrode conductor may include a material such as a metal material or an electrically conductive polymer.

### <1-2. Manufacturing Method>

The negative electrode 10 is manufactured, for example, by the following procedures.

First, the ion-conductive material 101, the carbon-containing particles 102, and the silicon-containing particles 103 are mixed together to thereby obtain a mixture. Thereafter, the mixture is put into a solvent, following which the solvent is stirred to thereby prepare a mixture solution. The solvent is not limited to a particular kind as long as any one or more solvents are used. Examples of the solvent include an aqueous solvent and an organic solvent that allow the ion-conductive material 101 to be dissolved therein. Examples of the aqueous solvent include pure water. Examples of the organic solvent include N-methyl-2-pyrrolidone. In a case of stirring the solvent, for example, a stirring apparatus such as a stirrer may be used. Thereafter, using a spray dryer, the mixture solution is sprayed and the sprayed mixture solution is dried. Thus, the carbon-containing particles 102 and the silicon-containing particles 103 are included in the ion-conductive material 101. As a result, the first negative electrode active material particles 100 are obtained.

Thereafter, the first negative electrode active material particles 100, the second negative electrode active material particles 200, and on an as-needed basis, materials including, without limitation, the negative electrode binder and the negative electrode conductor are mixed together to thereby obtain a negative electrode mixture. Thereafter, the negative electrode mixture is dispersed or dissolved into a solvent such as an organic solvent or an aqueous solvent to thereby prepare a paste negative electrode mixture slurry. Lastly, the negative electrode mixture slurry is applied on both sides of the negative electrode current collector 1, following which the applied negative electrode mixture slurry is dried to thereby form the negative electrode active material layers 2. Thereafter, the negative electrode active material layers 2 may be compression-molded by means of a machine such as a roll pressing machine. In this case, the negative electrode active material layers 2 may be heated. The negative electrode active material layers 2 may be compression-molded a plurality of times.

Thus, the negative electrode active material layer 2 is formed on each of both sides of the negative electrode current collector 1. As a result, the negative electrode 10 is completed.

### <1-3. Action and Effects>

According to the negative electrode 10, the negative electrode active material layer 2 having the fine pores includes the first negative electrode active material particles 100 and the second negative electrode active material particles 200. The first negative electrode active material particles 100 each include the ion-conductive material 101, the carbon-containing particles 102, and the silicon-containing particles 103. The corresponding pore size is within a range of greater than or equal to 1 µm and less than or equal to 3 µm .

In this case, as described above, the ion-conductive property markedly improves in the negative electrode active material layer 2 as a whole. For such a reason, regarding the lithium-ion secondary battery including the negative electrode 10 and the electrolytic solution, ion transport efficiency in the electrolytic solution markedly improves. This makes it easier for the lithium ions to enter and exit the negative electrode 10 smoothly and stably. Therefore, it is possible to obtain superior battery characteristics in a secondary battery including the negative electrode 10.

In particular, the ion-conductive material 101 may include a material such as the ion-conductive polymer compound. This helps to obtain a sufficient ion-conductive property inside the first negative electrode active material particles 100. It is therefore possible to achieve higher effects.

Further, the ion-conductive material 101 may have ionic conductivity of greater than or equal to 10⁻⁶ S/cm and less than or equal to 10⁻¹ S/cm. This makes it easier for the lithium ions to enter and exit each of the carbon-containing particles 102 and the silicon-containing particles 103 smoothly and stably. It is therefore possible to achieve higher effects.

Further, the weight proportion R1 may be greater than or equal to 1.0 wt% and less than or equal to 2.5 wt%. This helps to obtain a superior ion-conductive property while securing a high energy density. It is therefore possible to achieve higher effects.

Further, the weight proportion R2 may be greater than or equal to 60.6 wt% and less than or equal to 85.9 wt%. This helps to obtain both a high energy density and a superior ion-conductive property while suppressing swelling and contraction of the negative electrode active material layer 2 resulting from the presence of the silicon-containing material. It is therefore possible to achieve higher effects.

Further, the first negative electrode active material particles 100 may have the median diameter D50 of greater than or equal to 3.5 µm and less than or equal to 13.0 µm, and the second negative electrode active material particles 200 may have the median diameter D50 of greater than or equal to 7.0 µm and less than or equal to 20.0 µm. This makes it easier to so control the distribution of the fine pores that the predetermined condition is satisfied which is related to the volume fraction of the amount of the intruded mercury. It is therefore possible to achieve higher effects.

Further, the weight proportion R3 may be greater than or equal to 10.5 wt% and less than or equal to 42.1 wt%. This helps to obtain both a high energy density and a superior ion-conductive property while suppressing swelling and contraction of the negative electrode active material layer 2 resulting from the presence of the silicon-containing material. It is therefore possible to achieve higher effects.

### <2. Lithium-ion Secondary Battery>

Next, a description is given of a lithium-ion secondary battery according to an embodiment of the technology that uses the negative electrode 10 described above.

The lithium-ion secondary battery described below includes a positive electrode 21 and a negative electrode 22, as will be described later. The lithium-ion secondary battery obtains a capacity of the negative electrode 22 by utilizing lithium insertion and lithium extraction, for example.

For example, to prevent unintentional precipitation of lithium metal on a surface of the negative electrode 22 in the middle of charging, a chargeable capacity of the negative electrode 22 is greater than a discharge capacity of the positive electrode 21.

### <2-1. Cylindrical Type>

First, a lithium-ion secondary battery of a cylindrical type is described as an example of the lithium-ion secondary battery.

### <2-1-1. Configuration>

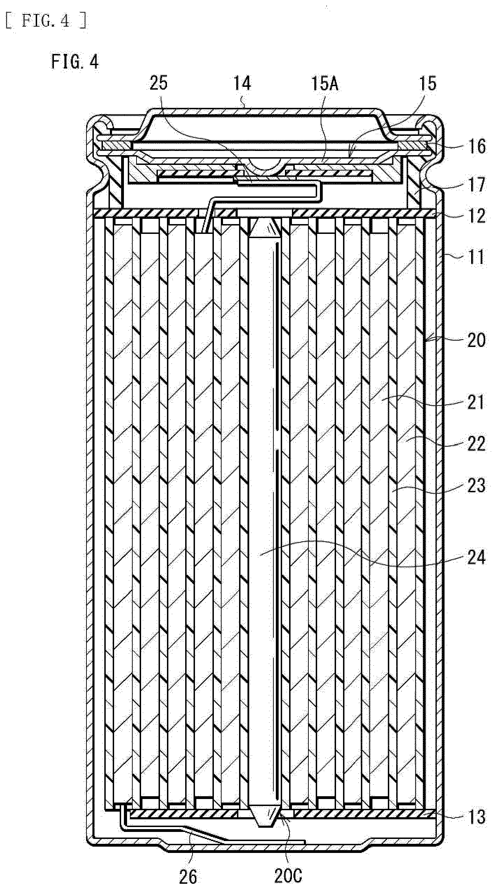

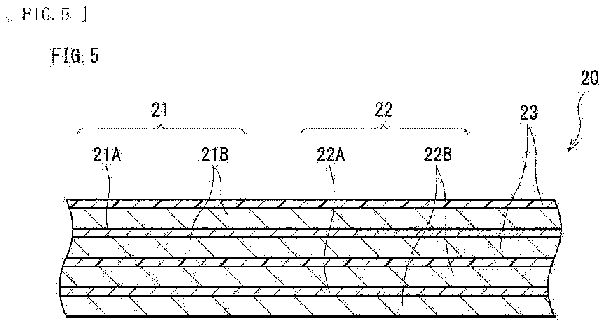

FIG. 4 illustrates a sectional configuration of the lithium-ion secondary battery. FIG. 5 illustrates, in an enlarged manner, a sectional configuration of a main part, i.e., a wound electrode body 20, of the lithium-ion secondary battery illustrated in FIG. 4. Note that FIG. 5 illustrates only a part of the wound electrode body 20.

Referring to FIG. 4, for example, the lithium-ion secondary battery includes a battery can 11 that has a cylindrical shape, and the battery can 11 contains the wound electrode body 20. The wound electrode body 20 serves as a battery device.

Specifically, the lithium-ion secondary battery includes a pair of insulating plates 12 and 13 and the wound electrode body 20 that are provided in the battery can 11, for example. The wound electrode body 20 is a structure in which, for example, the positive electrode 21 and the negative electrode 22 are stacked on each other with a separator 23 interposed therebetween, and also in which the stack of the positive electrode 21, the negative electrode 22, and the separator 23 is wound. The wound electrode body 20 is impregnated with an electrolytic solution. The electrolytic solution is a liquid electrolyte.

The battery can 11 has a hollow cylindrical structure having a closed end and an open end, for example. The battery can 11 includes, for example, a metal material such as iron. For example, the battery can 11 has a surface that may be plated with a metal material such as nickel. The insulating plate 12 and the insulating plate 13 each extend in a direction intersecting a wound peripheral surface of the wound electrode body 20, for example. The insulating plate 12 and the insulating plate 13 are disposed in such a manner as to interpose the wound electrode body 20 therebetween, for example.

A battery cover 14, a safety valve mechanism 15, and a positive temperature coefficient device (PTC device) 16 are crimped at the open end of the battery can 11 by means of a gasket 17, for example, thereby sealing the open end of the battery can 11. The battery cover 14 includes a material similar to a material included in the battery can 11, for example. The safety valve mechanism 15 and the positive temperature coefficient device 16 are each disposed on an inner side of the battery cover 14. The safety valve mechanism 15 is electrically coupled to the battery cover 14 via the positive temperature coefficient device 16. For example, when an internal pressure of the battery can 11 reaches a certain level or higher as a result of causes including, without limitation, internal short circuit and heating from outside, a disk plate 15A inverts in the safety valve mechanism 15, thereby cutting off the electrical coupling between the battery cover 14 and the wound electrode body 20. In order to prevent abnormal heat generation resulting from a large current, the positive temperature coefficient device 16 increases in electrical resistance with a rise in temperature. The gasket 17 includes an insulating material, for example. The gasket 17 may have a surface on which a material such as asphalt is applied, for example.

A center pin 24 is disposed in a space 20C provided at the winding center of the wound electrode body 20, for example. Note, however, that the center pin 24 may not necessarily be disposed in the space 20C. A positive electrode lead 25 is coupled to the positive electrode 21. The positive electrode lead 25 includes an electrically conductive material such as aluminum. The positive electrode lead 25 is electrically coupled to the battery cover 14 via the safety valve mechanism 15, for example. A negative electrode lead 26 is coupled to the negative electrode 22. The negative electrode lead 26 includes an electrically conductive material such as nickel. The negative electrode lead 26 is electrically coupled to the battery can 11, for example.

### [Positive Electrode]

As illustrated in FIG. 5, the positive electrode 21 includes, for example, a positive electrode current collector 21A, and a positive electrode active material layer 21B provided on the positive electrode current collector 21A. The positive electrode active material layer 21B may be provided, for example, only on one side of the positive electrode current collector 21A, or on each of both sides of the positive electrode current collector 21A. FIG. 5 illustrates a case where the positive electrode active material layer 21B is provided on each of both sides of the positive electrode current collector 21A, for example.

The positive electrode current collector 21A includes, for example, an electrically conductive material such as aluminum. The positive electrode active material layer 21B includes, as a positive electrode active material or positive electrode active materials, one or more of positive electrode materials into which lithium is insertable and from which lithium is extractable. The positive electrode active material layer 21B may further include one or more of other materials, examples of which include a positive electrode binder and a positive electrode conductor.

The positive electrode material includes a lithium compound, for example. The term "lithium compound" is a generic term for a compound that includes lithium as a constituent element. A reason for this is that a high energy density is achievable. The lithium compound is not limited to a particular kind, and examples thereof include a lithium composite oxide and a lithium phosphate compound.

The lithium composite oxide is an oxide that includes, as constituent elements, lithium and one or more of other elements. The lithium composite oxide has any of crystal structures including, without limitation, a layered rock-salt crystal structure and a spinel crystal structure, for example. The lithium phosphate compound is a phosphate compound that includes, as constituent elements, lithium and one or more of the other elements. The lithium phosphate compound has a crystal structure such as an olivine crystal structure, for example.

The other elements are elements other than lithium. The other elements are not limited to particular kinds; however, it is preferable that the other elements belong to groups 2 to 15 in the long periodic table of elements, in particular. A reason for this is that a higher voltage is obtainable. Specific examples of the other elements include nickel, cobalt, manganese, and iron.

Examples of the lithium composite oxide having the layered rock-salt crystal structure include LiNiO₂, LiCoO₂, LiCo_{0.98}Al_{0.01}Mg_{0.01}O₂, LiNi_{o.5}Co_{0.2}Mn_{0.3}O₂, LiNi₀.₈Co₀.₁₅Al_{0.05}O₂, LiNi_{0.33}Co_{0.33}Mn_{0.33}O₂, Li_{1.2}Mn_{0.52}Co_{0.175}Ni_{0.1}O₂, and Li_{1.15}(Mn_{0.65}Ni_{0.22}Co_{0.13})O₂. Examples of the lithium composite oxide having the spinel crystal structure include LiMn₂O₄. Examples of the lithium phosphate compound having the olivine crystal structure include LiFePO₄, LiMnPO₄, LiMn_{0.5}Fe_{0.5}PO₄, LiMn_{0.7}Fe_{0.3}PO₄, and LiMn_{0.75}Fe_{0.25}PO₄.

Details of the positive electrode binder and the negative electrode conductor are similar, for example, to details of the negative electrode binder and the negative electrode conductor, respectively.

### [Negative Electrode]

The negative electrode 22 has a configuration similar to that of the negative electrode 10 described above. That is, the negative electrode 22 includes, for example, a negative electrode current collector 22A and a negative electrode active material layer 22B, as illustrated in FIG. 5. The configurations of the negative electrode current collector 22A and the negative electrode active material layer 22B are similar to those of the negative electrode current collector 1 and the negative electrode active material layer 2, respectively.

### [Separator]

The separator 23 includes a porous film of a material such as a synthetic resin or ceramic, for example. The separator 23 may be a stacked film including two or more porous films that are stacked on each other, in one example. Examples of the synthetic resin include polyethylene.

In particular, the separator 23 may include the porous film and a polymer compound layer, for example. The porous film serves as a base layer. The polymer compound layer is provided on one side or on each of both sides of the base layer, for example. A reason for this is that adherence of the separator 23 to the positive electrode 21 improves and adherence of the separator 23 to the negative electrode 22 also improves to suppress distortion of the wound electrode body 20. This reduces a decomposition reaction of the electrolytic solution, and also reduces leakage of the electrolytic solution with which the base layer is impregnated.

The polymer compound layer includes a polymer compound such as polyvinylidene difluoride, for example. A reason for this is that such a polymer compound has superior physical strength and is electrochemically stable. For example, the polymer compound layer may include insulating particles such as inorganic particles. A reason for this is that safety improves. The inorganic particles are not limited to a particular kind, and examples thereof include aluminum oxide and aluminum nitride.

### [Electrolytic Solution]

The wound electrode body 20 is impregnated with the electrolytic solution, as described above. Accordingly, the separator 23 is impregnated with the electrolytic solution, and each of the positive electrode 21 and the negative electrode 22 is also impregnated with the electrolytic solution, for example. The electrolytic solution includes, for example, a solvent and an electrolyte salt.

The solvent includes one or more of non-aqueous solvents (organic solvents), for example. An electrolytic solution including the non-aqueous solvent is a so-called non-aqueous electrolytic solution.

The non-aqueous solvent is not limited to a particular kind, and examples thereof include a cyclic carbonate ester, a chain carbonate ester, a lactone, a chain carboxylate ester, and a nitrile (mononitrile) compound. Examples of the cyclic carbonate ester include ethylene carbonate and propylene carbonate. Examples of the chain carbonate ester include dimethyl carbonate and diethyl carbonate. Examples of the lactone include γ-butyrolactone and γ-valerolactone. Examples of the chain carboxylate ester include methyl acetate, ethyl acetate, and methyl propionate. Examples of the nitrile compound include acetonitrile, methoxy acetonitrile, and 3-methoxy propionitrile. A reason why such a non-aqueous solvent may be used is that superior characteristics including, without limitation, a superior battery capacity, a superior cyclability characteristic, and a superior storage characteristic are obtainable.

Examples of the non-aqueous solvent further include an unsaturated cyclic carbonate ester, a halogenated carbonate ester, a sulfonate ester, an acid anhydride, a dicyano compound (a dinitrile compound), a diisocyanate compound, and a phosphate ester. Examples of the unsaturated cyclic carbonate ester include vinylene carbonate, vinyl ethylene carbonate, and methylene ethylene carbonate. Examples of the halogenated carbonate ester include 4-fluoro-1,3-dioxolane-2-one, 4,5-difluoro-1,3-dioxolane-2-one, and fluoromethyl methyl carbonate. Examples of the sulfonate ester include 1,3-propane sultone and 1,3-propene sultone. Examples of the acid anhydride include succinic anhydride, glutaric anhydride, maleic anhydride, ethane disulfonic anhydride, propane disulfonic anhydride, sulfobenzoic anhydride, sulfopropionic anhydride, and sulfobutyric anhydride. Examples of the dinitrile compound include succinonitrile, glutaronitrile, adiponitrile, and phthalonitrile. Examples of the diisocyanate compound include hexamethylene diisocyanate. Examples of the phosphate ester include trimethyl phosphate and triethyl phosphate. A reason why such a non-aqueous solvent may be used is that one or more of the series of characteristics described above further improve.

The electrolyte salt includes one or more of lithium salts, for example. The lithium salt is not limited to a particular kind, and examples thereof include lithium hexafluorophosphate (LiPF₆), lithium tetrafluoroborate (LiBF₄), lithium bis(fluorosulfonyl)imide (LiN(SO₂F)₂), lithium bis(trifluoromethane sulfonyl)imide (LiN(CF₃SO₂)₂), lithium fluorophosphate (Li₂PFO₃), lithium difluorophosphate (LiPF₂O₂), and lithium bis(oxalato)borate (LiC₄BO₈). A reason why such an electrolyte salt may be used is that superior characteristics including, without limitation, a superior battery capacity, a superior cyclability characteristic, and a superior storage characteristic are obtainable.

A content of the electrolyte salt is, for example, more than or equal to 0.3 mol/kg and less than or equal to 3.0 mol/kg with respect to the solvent, but is not particularly limited thereto.

### <2-1-2. Operation>

Upon charging the lithium-ion secondary battery, for example, lithium ions are extracted from the positive electrode 21, and the extracted lithium ions are inserted into the negative electrode 22 via the electrolytic solution. Upon discharging the lithium-ion secondary battery, for example, lithium ions are extracted from the negative electrode 22, and the extracted lithium ions are inserted into the positive electrode 21 via the electrolytic solution.

### <2-1-3. Manufacturing Method>

In a case of manufacturing the lithium-ion secondary battery, for example, fabrication of the positive electrode 21, fabrication of the negative electrode 22, and preparation of the electrolytic solution are performed, following which assembly of the lithium-ion secondary battery is performed by the procedures described below.

### [Fabrication of Positive Electrode]

First, the positive electrode active material is mixed with materials including, without limitation, the positive electrode binder and the positive electrode conductor on an as-needed basis to thereby obtain a positive electrode mixture. Thereafter, the positive electrode mixture is dispersed or dissolved into a solvent such as an organic solvent or an aqueous solvent to thereby prepare a paste positive electrode mixture slurry. Lastly, the positive electrode mixture slurry is applied on both sides of the positive electrode current collector 21A, following which the applied positive electrode mixture slurry is dried to thereby form the positive electrode active material layers 21B. Thereafter, the positive electrode active material layers 21B may be compression-molded by means of a machine such as a roll pressing machine. In this case, the positive electrode active material layers 21B may be heated. The positive electrode active material layers 21B may be compression-molded a plurality of times.

### [Fabrication of Negative Electrode]

The negative electrode active material layers 22B are formed on both sides of the negative electrode current collector 22A by a procedure similar to the fabrication procedure of the negative electrode 20 described above.

### [Preparation of Electrolytic Solution]

An electrolyte salt is added to a solvent, following which the solvent is stirred to dissolve the electrolyte salt in the solvent. In this case, materials including, without limitation, the unsaturated cyclic carbonate ester and the halogenated carbonate ester described above may be added to the solvent as additives.

### [Assembly of Lithium-ion Secondary Battery]

First, the positive electrode lead 25 is coupled to the positive electrode current collector 21A by a method such as a welding method, and the negative electrode lead 26 is coupled to the negative electrode current collector 22A by a method such as a welding method. Thereafter, the positive electrode 21 and the negative electrode 22 are stacked on each other with the separator 23 interposed therebetween, following which the stack of the positive electrode 21, the negative electrode 22, and the separator 23 is wound to thereby form a wound body. Thereafter, the center pin 24 is disposed in the space 20C provided at the winding center of the wound body.

Thereafter, the wound body is interposed between the pair of insulating plates 12 and 13, and the wound body in that state is housed in the battery can 11. In this case, the positive electrode lead 25 is coupled to the safety valve mechanism 15 by a method such as a welding method, and the negative electrode lead 26 is coupled to the battery can 11 by a method such as a welding method. Thereafter, the electrolytic solution is injected into the battery can 11 to thereby impregnate the wound body with the electrolytic solution, causing each of the positive electrode 21, the negative electrode 22, and the separator 23 to be impregnated with the electrolytic solution. As a result, the wound electrode body 20 is formed.

Lastly, the open end of the battery can 11 is crimped by means of the gasket 17 to thereby attach the battery cover 14, the safety valve mechanism 15, and the positive temperature coefficient device 16 to the open end of the battery can 11. Thus, the wound electrode body 20 is sealed in the battery can 11. As a result, the lithium-ion secondary battery is completed.

### <2-1-4. Action and Effects>

According to the cylindrical lithium-ion secondary battery, the negative electrode 22 has a configuration similar to that of the negative electrode 10 described above. Accordingly, for the reasons described above, it is easier for the lithium ions to enter and exit the negative electrode 22 smoothly and stably. It is therefore possible to achieve superior battery characteristics. Action and effects of the cylindrical lithium-ion secondary battery other than the above are similar to those of the negative electrode 10 described above.

### <2-2. Laminated-film Type>

Next, a lithium-ion secondary battery of a laminated-film type is described as another example of the lithium-ion secondary battery. In the following description, the components of the cylindrical lithium-ion secondary battery described already are referred to where appropriate with reference to FIGs. 4 and 5.

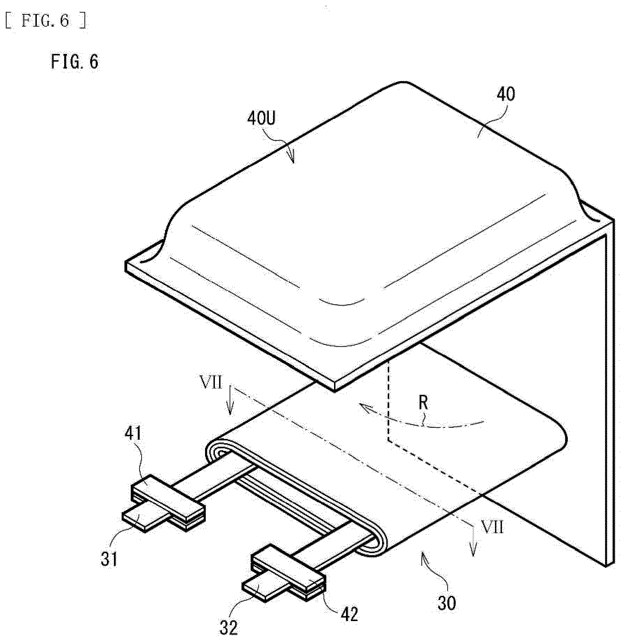

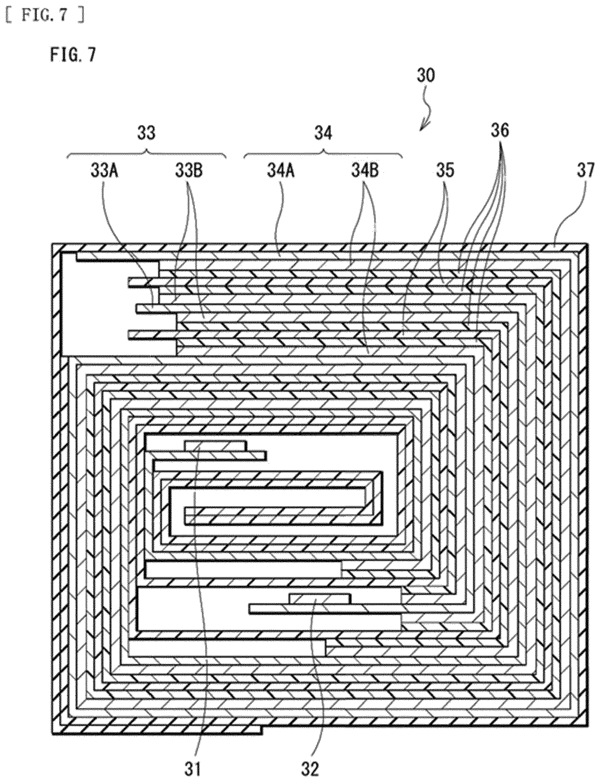

FIG. 6 is a perspective view of a configuration of another lithium-ion secondary battery. FIG. 7 illustrates, in an enlarged manner, a sectional configuration of a main part, i.e., a wound electrode body 30, of the lithium-ion secondary battery taken along a line VII-VII illustrated in FIG. 6. Note that FIG. 6 illustrates a state in which the wound electrode body 30 and an outer package member 40 are separated away from each other.

### <2-2-1. Configuration>

Referring to FIG. 6, for example, the lithium-ion secondary battery is provided with the outer package member 40 that has a film shape. The outer package member 40 houses a battery device, i.e., the wound electrode body 30. The outer package member 40 has softness or flexibility.

The wound electrode body 30 has a structure in which a positive electrode 33 and a negative electrode 34 are stacked on each other with a separator 35 and an electrolyte layer 36 interposed therebetween and in which the stack of the positive electrode 33, the negative electrode 34, the separator 35, and the electrolyte layer 36 is wound, for example. A surface of the wound electrode body 30 is protected by means of, for example, a protective tape 37. The electrolyte layer 36 is interposed between the positive electrode 33 and the separator 35, and is also interposed between the negative electrode 34 and the separator 35, for example.

A positive electrode lead 31 is coupled to the positive electrode 33. The positive electrode lead 31 is led out from inside to outside of the outer package member 40. The positive electrode lead 31 includes a material similar to a material included in the positive electrode lead 25, for example. The positive electrode lead 31 has a shape such as a thin-plate shape or a meshed shape.

A negative electrode lead 32 is coupled to the negative electrode 34. The negative electrode lead 32 is led out from the inside to the outside of the outer package member 40. The direction in which the negative electrode lead 32 is led out is similar to that of the positive electrode lead 31, for example. The negative electrode lead 32 includes, for example, a material similar to a material included in the negative electrode lead 26. The negative electrode lead 32 has a shape similar to that of the positive electrode lead 31, for example.

### [Outer Package Member]

The outer package member 40 is, for example, a single film that is foldable in a direction of an arrow R illustrated in FIG. 6. The outer package member 40 includes a portion having a depression 40U, for example. The depression 40U is adapted to receive the wound electrode body 30.

The outer package member 40 is a stacked body or a laminated film including, for example, a fusion-bonding layer, a metal layer, and a surface protective layer that are stacked in this order from an inner side to an outer side. In a process of manufacturing the lithium-ion secondary battery, for example, the outer package member 40 is folded in such a manner that portions of the fusion-bonding layer oppose each other with the wound electrode body 30 interposed therebetween. Thereafter, outer edges of the fusion-bonding layer are fusion-bonded to each other. The fusion-bonding layer is a film that includes, for example, a polymer compound such as polypropylene. The metal layer is, for example, a metal foil that includes a metal material such as aluminum. The surface protective layer is a film that includes, for example, a polymer compound such as nylon. The outer package member 40 may include, for example, two laminated films that are adhered to each other by means of a material such as an adhesive.

A sealing film 41, for example, is interposed between the outer package member 40 and the positive electrode lead 31. The sealing film 41 is adapted to prevent entry of outside air. The sealing film 41 includes, for example, a polyolefin resin such as polypropylene.

A sealing film 42, for example, is interposed between the outer package member 40 and the negative electrode lead 32. The sealing film 42 has a function similar to that of the sealing film 41. A material included in the sealing film 42 is, for example, similar to the material included in the sealing film 41.

### [Positive Electrode, Negative Electrode, and Separator]

The positive electrode 33 includes, for example, a positive electrode current collector 33A and a positive electrode active material layer 33B. The negative electrode 34 includes, for example, a negative electrode current collector 34A and a negative electrode active material layer 34B. The positive electrode current collector 33A, the positive electrode active material layer 33B, the negative electrode current collector 34A, and the negative electrode active material layer 34B respectively have configurations similar to those of the positive electrode current collector 21A, the positive electrode active material layer 21B, the negative electrode current collector 22A, and the negative electrode active material layer 22B, for example. The separator 35 has a configuration similar to that of the separator 23, for example.

### [Electrolyte Layer]

The electrolyte layer 36 includes an electrolytic solution and a polymer compound. The electrolyte layer 36 described here is a so-called gel electrolyte in which the polymer compound holds the electrolytic solution. A reason for this is that high ionic conductivity is obtainable and leakage of the electrolytic solution is prevented. The high ionic conductivity is 1 mS/cm or higher at room temperature, for example. The electrolyte layer 36 may further include other materials including, without limitation, various additives.

A configuration of the electrolytic solution is as described above. The polymer compound includes, for example, a homopolymer, a copolymer, or both. Examples of the homopolymer include polyvinylidene difluoride. Examples of the copolymer include a copolymer of vinylidene fluoride and hexafluoropylene.

Regarding the electrolyte layer 36 which is a gel electrolyte, the concept of the solvent included in the electrolytic solution is broad and encompasses not only a liquid material but also an ion-conductive material that is able to dissociate the electrolyte salt. Accordingly, in a case of using an ion-conductive polymer compound, the polymer compound is also encompassed by the solvent.

### <2-2-2. Operation>

The lithium-ion secondary battery operates as follows, for example. Upon charging the lithium-ion secondary battery, lithium ions are extracted from the positive electrode 33, and the extracted lithium ions are inserted into the negative electrode 34 via the electrolyte layer 36. Upon discharging the lithium-ion secondary battery, lithium ions are extracted from the negative electrode 34, and the extracted lithium ions are inserted into the positive electrode 33 via the electrolyte layer 36.

### <2-2-3. Manufacturing Method>

The lithium-ion secondary battery including the electrolyte layer 36 is manufactured by any of the following three kinds of procedures, for example.

### [First Procedure]

First, the positive electrode 33 is fabricated by a procedure similar to that of the positive electrode 21. That is, the positive electrode 33 is fabricated by forming the positive electrode active material layers 33B on both sides of the positive electrode current collector 33A. Further, the negative electrode 34 is fabricated by a procedure similar to that of the negative electrode 22. That is, the negative electrode 34 is fabricated by forming the negative electrode active material layers 34B on both sides of the negative electrode current collector 34A.

Thereafter, the electrolytic solution is prepared, following which the prepared electrolytic solution, the polymer compound, and a material such as an organic solvent are mixed to thereby prepare a precursor solution. Thereafter, the precursor solution is applied on the positive electrode 33, following which the applied precursor solution is dried to thereby form the electrolyte layer 36. The precursor solution is also applied on the negative electrode 34, following which the applied precursor solution is dried to thereby form the electrolyte layer 36. Thereafter, the positive electrode lead 31 is coupled to the positive electrode current collector 33A by a method such as a welding method, and the negative electrode lead 32 is coupled to the negative electrode current collector 34A by a method such as a welding method. Thereafter, the positive electrode 33 and the negative electrode 34 are stacked on each other with the separator 35 and the electrolyte layer 36 interposed therebetween, following which the stack of the positive electrode 33, the negative electrode 34, the separator 35, and the electrolyte layer 36 is wound to thereby form the wound electrode body 30. Thereafter, the protective tape 37 is attached to a surface of the wound electrode body 30.

Lastly, the outer package member 40 is folded in such a manner as to sandwich the wound electrode body 30, following which the outer edges of the outer package member 40 are bonded to each other by a method such as a thermal fusion bonding method. In this case, the sealing film 41 is interposed between the outer package member 40 and the positive electrode lead 31, and the sealing film 42 is interposed between the outer package member 40 and the negative electrode lead 32. Thus, the wound electrode body 30 is sealed in the outer package member 40. As a result, the lithium-ion secondary battery is completed.

### [Second Procedure]

First, the positive electrode 33 and the negative electrode 34 are fabricated. Thereafter, the positive electrode lead 31 is coupled to the positive electrode 33, and the negative electrode lead 32 is coupled to the negative electrode 34. Thereafter, the positive electrode 33 and the negative electrode 34 are stacked on each other with the separator 35 interposed therebetween, following which the stack of the positive electrode 33, the negative electrode 34, and the separator 35 is wound to thereby form a wound body. Thereafter, the protective tape 37 is attached to a surface of the wound body. Thereafter, the outer package member 40 is folded in such a manner as to sandwich the wound body, following which the outer edges, excluding the outer edge of one side, of the outer package member 40 are bonded to each other by a method such as a thermal fusion bonding method. Thus, the wound body is contained in the pouch-shaped outer package member 40.

Thereafter, the electrolytic solution, monomers, and a polymerization initiator are mixed, following which the mixture is stirred to thereby prepare a composition for electrolyte. The monomers are raw materials of the polymer compound. Another material such as a polymerization inhibitor is mixed on an as-needed basis in addition to the electrolytic solution, the monomers, and the polymerization initiator. Thereafter, the composition for electrolyte is injected into the pouch-shaped outer package member 40, following which the outer package member 40 is sealed by a method such as a thermal fusion bonding method. Lastly, the monomers are thermally polymerized to thereby form the polymer compound. This allows the electrolytic solution to be held by the polymer compound, thereby forming the electrolyte layer 36. Thus, the wound electrode body 30 is sealed in the outer package member 40. As a result, the lithium-ion secondary battery is completed.

### [Third Procedure]

First, a wound body is fabricated and the wound body is contained in the pouch-shaped outer package member 40 thereafter by a procedure similar to the second procedure, except for using the separator 35 that includes polymer compound layers provided on both sides of a base layer. Thereafter, the electrolytic solution is injected into the outer package member 40, following which an opening of the outer package member 40 is sealed by a method such as a thermal fusion bonding method. Lastly, the outer package member 40 is heated with a weight being applied to the outer package member 40 to thereby cause the separator 35 to be closely attached to each of the positive electrode 33 and the negative electrode 34 with the polymer compound layer interposed therebetween. The polymer compound layer is thereby impregnated with the electrolytic solution, and such a polymer compound layer is gelated, forming the electrolyte layer 36. Thus, the wound electrode body 30 is sealed in the outer package member 40. As a result, the lithium-ion secondary battery is completed.

The third procedure helps to reduce swelling of the lithium-ion secondary battery, in contrast to the first procedure. The third procedure also helps to prevent the solvent and the monomers, which are the raw materials of the polymer compound, from remaining in the electrolyte layer 36, in contrast to the second procedure. Accordingly, the electrolyte layer 36 is sufficiently closely attached to each of the positive electrode 33, the negative electrode 34, and the separator 35.

### <2-2-4. Action and Effects>

According to the laminated lithium-ion secondary battery, the negative electrode 34 has a configuration similar to that of the negative electrode 10 described above. Accordingly, it is possible to achieve superior battery characteristics, as with the cylindrical lithium-ion secondary battery described above. Action and effects related to the cylindrical laminated lithium-ion secondary battery other than the above are similar to those related to the cylindrical lithium-ion secondary battery.

### <3. Modifications>

The laminated lithium-ion secondary battery may include, for example, the electrolytic solution instead of the electrolyte layer 36. In this case, the wound electrode body 30 is impregnated with the electrolytic solution; thus, each of the positive electrode 33, the negative electrode 34, and the separator 35 is impregnated with the electrolytic solution. Further, the wound body is contained in the pouch-shaped outer package member 40, following which the electrolytic solution is injected into the pouch-shaped outer package member 40 to thereby impregnate the wound body with the electrolytic solution. As a result, the wound electrode body 30 is formed. Similar effects are also obtainable in this case.

### <4. Applications of Lithium-ion Secondary Battery>

Examples of applications of the lithium-ion secondary battery are as described below. Note that applications of the negative electrode are described together below, because the applications of the negative electrode are similar to the applications of the lithium-ion secondary battery.

The applications of the lithium-ion secondary battery are not particularly limited as long as they are, for example, machines, apparatuses, instruments, devices, or systems (assembly of a plurality of apparatuses, for example) in which the lithium-ion secondary battery is usable as a driving power source, an electric power storage source for electric power accumulation, or any other source. The lithium-ion secondary battery used as a power source may serve as a main power source or an auxiliary power source. The main power source is preferentially used regardless of the presence of any other power source. The auxiliary power source may be, for example, used in place of the main power source, or may be switched from the main power source on an as-needed basis. In a case where the lithium-ion secondary battery is used as the auxiliary power source, the kind of the main power source is not limited to the lithium-ion secondary battery.

Examples of the applications of the lithium-ion secondary battery include: electronic apparatuses including portable electronic apparatuses; portable life appliances; storage devices; electric power tools; battery packs mountable on laptop personal computers or other apparatuses as a detachable power source; medical electronic apparatuses; electric vehicles; and electric power storage systems. Examples of the electronic apparatuses include video cameras, digital still cameras, mobile phones, laptop personal computers, cordless phones, headphone stereos, portable radios, portable televisions, and portable information terminals. Examples of the portable life appliances include electric shavers. Examples of the storage devices include backup power sources and memory cards. Examples of the electric power tools include electric drills and electric saws. Examples of the medical electronic apparatuses include pacemakers and hearing aids. Examples of the electric vehicles include electric automobiles including hybrid automobiles. Examples of the electric power storage systems include home battery systems for accumulation of electric power for emergency. Needless to say, the lithium-ion secondary battery may have applications other than those described above.

### Examples

A description is given of Examples of the technology.

### (Experiment Examples 1 to 17)

The laminated lithium-ion secondary batteries each corresponding to the one illustrated in FIGs. 6 and 7 were fabricated and their respective battery characteristics were evaluated as described below.

### [Fabrication of Lithium-ion Secondary Battery]

In a case of fabricating the positive electrode 33, first, 91 parts by mass of the positive electrode active material (lithium cobalt oxide (LiCoO₂)), 3 parts by mass of the positive electrode binder (polyvinylidene difluoride), and 6 parts by mass of the positive electrode conductor (graphite) were mixed to thereby obtain a positive electrode mixture. Thereafter, the positive electrode mixture was put into an organic solvent (N-methyl-2-pyrrolidone), following which the organic solvent was stirred to thereby prepare a paste positive electrode mixture slurry. Thereafter, the positive electrode mixture slurry was applied on both sides of the positive electrode current collector 33A (a band-shaped aluminum foil having a thickness of 12 µm) by means of a coating apparatus, following which the applied positive electrode mixture slurry was dried to thereby form the positive electrode active material layers 33B. Lastly, the positive electrode active material layers 33B were compression-molded by means of a roll pressing machine.

In a case of fabricating the negative electrode 34, first, an ion-conductive material (polyethylene oxide (PEO) which is an ion-conductive polymer compound and has ionic conductivity of 10⁻⁶ S/cm), carbon-containing particles (graphite), and silicon-containing particles (silicon) were mixed together to obtain a mixture. The mixture rate (wt%) of each of the ion-conductive material, the carbon-containing particles, and the silicon-containing particles and the weight proportions R1 and R2 (wt%) were as described in Table 1. Thereafter, the mixture was put into an aqueous solvent (pure water), following which the solvent was stirred by means of a stirrer to thereby prepare a mixture solution. Thereafter, using a spray dryer, the mixture solution was sprayed and the sprayed mixture solution was dried at a drying temperature of 150°C to thereby obtain the first negative electrode active material particles in which the carbon-containing particles and the silicon-containing particles were included in the ion-conductive material. In this case, the median diameter D50 (µm) of the first negative electrode active material particles was adjusted as described in Table 1.

In the case of fabricating the negative electrode 34, similar procedures were executed except that a non-ion-conductive polymer compound (carboxymethyl cellulose (CMC)) was used instead of the ion-conductive polymer compound (PEO) for comparison. Table 1 includes carboxymethyl cellulose (CMC) also in the column of the ion-conductive material.

Thereafter, the first negative electrode active material particles, the second negative electrode active material particles (graphite), 3.0 parts by mass of the negative electrode binder (polyvinylidene difluoride), and 2.0 parts by mass of the negative electrode conductor (carbon black) were mixed to thereby obtain a negative electrode mixture. The mixture rate (wt%) of each of the first negative electrode active material particles and the second negative electrode active material particles and the weight proportion R3 (wt%) were as described in Table 1. In this case, the median diameter D50 (µm) of the second negative electrode active material particles was adjusted as described in Table 1. Thereafter, the negative electrode mixture was put into an organic solvent (N-methyl-2-pyrrolidone), following which the organic solvent was stirred to thereby prepare a paste negative electrode mixture slurry. Thereafter, the negative electrode mixture slurry was applied on both sides of the negative electrode current collector 34A (a band-shaped copper foil having a thickness of 15 µm) by means of a coating apparatus, following which the applied negative electrode mixture slurry was dried to thereby form the negative electrode active material layers 34B. Lastly, the negative electrode active material layers 34B were compression-molded by means of a roll pressing machine.

After the fabrication of the negative electrode 34, the corresponding pore size (µm) was checked by means of a mercury porosimeter, and results described in Table 2 were obtained. Details of the model number of the mercury porosimeter, the measurement condition, etc. were as described above. In this case, the corresponding pore size was adjusted by changing each of the median diameter D50 of the first negative electrode active material particles and the median diameter D50 of the second negative electrode active material particles, as described in Tables 1 and 2.

In a case of preparing the electrolytic solution, the electrolyte salt (lithium hexafluorophosphate) was added to a solvent (ethylene carbonate and dimethyl carbonate), following which the solvent was stirred. In this case, a mixture ratio (a weight ratio) between ethylene carbonate and dimethyl carbonate in the solvent was set to 40:60, and the content of the electrolyte salt with respect to the solvent was set to 1.0 mol/kg.

In a case of assembling the lithium-ion secondary battery, first, the positive electrode lead 31 including aluminum was welded to the positive electrode current collector 33A, and the negative electrode lead 32 including copper was welded to the negative electrode current collector 34A. Thereafter, the positive electrode 33 and the negative electrode 34 were stacked on each other with the separator 35 (a fine-porous polyethylene film having a thickness of 15 µm) interposed therebetween to thereby obtain a stacked body. Thereafter, the stacked body was wound, following which the protective tape 37 was attached to the stacked body to thereby obtain a wound body.

Thereafter, the outer package member 40 was folded in such a manner as to sandwich the wound body, following which the outer edges of two sides of the outer package member 40 were thermal fusion bonded to each other. As the outer package member 40, an aluminum laminated film was used in which a surface protective layer (a nylon film having a thickness of 25 µm), a metal layer (an aluminum foil having a thickness of 40 µm), and a fusion-bonding layer (a polypropylene film having a thickness of 30 µm) were stacked in this order. In this case, the sealing film 41 (a polypropylene film) was interposed between the outer package member 40 and the positive electrode lead 31, and the sealing film 42 (a polypropylene film) was interposed between the outer package member 40 and the negative electrode lead 32.

Lastly, the electrolytic solution was injected into the outer package member 40 to thereby impregnate the wound body with the electrolytic solution, and thereafter, the outer edges of one of the remaining sides of the outer package member 40 were thermal fusion bonded to each other in a reduced-pressure environment. Thus, the wound electrode body 30 was formed, being sealed in the outer package member 40. As a result, the laminated lithium-ion secondary battery was completed.

### [Evaluation of Lithium-ion Battery Characteristics]

Evaluation of battery characteristics of the lithium-ion secondary batteries revealed the results described in Table 2. A load characteristic representing a lithium-ion entering and exiting characteristic was evaluated here.

In a case of examining the load characteristic, first, the lithium-ion secondary battery was charged and discharged for one cycle in an ambient-temperature environment (at a temperature of 23°C) in order to stabilize a state of the lithium-ion secondary battery. Upon charging, the lithium-ion secondary battery was charged with a constant current of 0.2 C until a voltage reached 4.2 V, and was thereafter charged with a constant voltage of 4.2 V until a current reached 0.05 C and discharged with a constant current of 0.2 C until the voltage reached 2.5 V. Note that 0.2 C and 0.05 C are values of currents that cause battery capacities (theoretical capacities) to be completely discharged in 5 hours and 20 hours, respectively.

Thereafter, the lithium-ion secondary battery was charged and discharged for another cycle in the same environment, following which a second-cycle discharge capacity was measured. Charging and discharging conditions were similar to those in the case of stabilizing the state of the lithium-ion secondary battery.

Thereafter, the lithium-ion secondary battery was charged and discharged for another cycle in the same environment, following which a third-cycle discharge capacity was measured. Charging and discharging conditions were similar to those in the case of stabilizing the state of the lithium-ion secondary battery, except that the current at the time of discharging was changed to 1.0 C, 1.5 C, and 2.0 C. Note that 1.0 C, 1.5 C, and 2.0 C are values of currents that cause battery capacities (theoretical capacities) to be completely discharged in 1 hour, 2/3 hours, and 0.5 hours, respectively.

Lastly, the following was calculated: load retention rate (%) = (third-cycle discharge capacity/ second-cycle discharge capacity) × 100. Note that each of "1.0 C", "1.5 C", and "2.0 C" represents the current value at the time of the discharging at the third cycle.

### [Table 1]

**Table 1**

| Experiment example | First negative electrode active material particles | | | | | | | | | | Second negative electrode active material particles | | | R3 (wt%) |
|---|---|---|---|---|---|---|---|---|---|---|---|---|---|---|
| | Carbon-containing particles | | Silicon-containing particles | | | Ion-conductive material | | | Mixture rate (wt%) | D50 (µm) | Kind | Mixture rate (wt%) | D50 (µm) | |
| | Kind | Mixture rate (wt%) | Kind | Mixture rate (wt%) | R2 (wt%) | Kind | Mixture rate (wt%) | R1 (wt%) | | | | | | |
| 1 | Graphite | 2.9 | Silicon | 7.0 | 70.7 | PEO | 0.1 | 1.0 | 10.0 | 10.0 | Graphite | 85.0 | 20.0 | 10.5 |
| 2 | Graphite | 2.9 | Silicon | 7.0 | 70.7 | PEO | 0.1 | 1.0 | 10.0 | 5.0 | Graphite | 85.0 | 20.0 | 10.5 |
| 3 | Graphite | 2.9 | Silicon | 7.0 | 70.7 | PEO | 0.1 | 1.0 | 10.0 | 8.0 | Graphite | 85.0 | 20.0 | 10.5 |
| 4 | Graphite | 2.9 | Silicon | 7.0 | 70.7 | PEO | 0.1 | 1.0 | 10.0 | 13.0 | Graphite | 85.0 | 20.0 | 10.5 |
| 5 | Graphite | 2.9 | Silicon | 7.0 | 70.7 | PEO | 0.1 | 1.0 | 10.0 | 7.5 | Graphite | 85.0 | 15.0 | 10.5 |
| 6 | Graphite | 2.9 | Silicon | 7.0 | 70.7 | PEO | 0.1 | 1.0 | 10.0 | 5.5 | Graphite | 85.0 | 11.0 | 10.5 |
| 7 | Graphite | 2.9 | Silicon | 7.0 | 70.7 | PEO | 0.1 | 1.0 | 10.0 | 3.5 | Graphite | 85.0 | 7.0 | 10.5 |
| 8 | Graphite | 3.9 | Silicon | 6.0 | 60.6 | PEO | 0.1 | 1.0 | 10.0 | 10.0 | Graphite | 85.0 | 20.0 | 10.5 |
| 9 | Graphite | 1.9 | Silicon | 8.0 | 80.8 | PEO | 0.1 | 1.0 | 10.0 | 10.0 | Graphite | 85.0 | 20.0 | 10.5 |
| 10 | Graphite | 5.8 | Silicon | 14.0 | 70.7 | PEO | 0.2 | 1.0 | 20.0 | 10.0 | Graphite | 75.0 | 20.0 | 21.1 |
| 11 | Graphite | 11.6 | Silicon | 28.0 | 70.7 | PEO | 0.4 | 1.0 | 40.0 | 10.0 | Graphite | 55.0 | 20.0 | 42.1 |
| 12 | Graphite | 2.9 | Silicon | 6.9 | 70.4 | PEO | 0.2 | 2.0 | 10.0 | 10.0 | Graphite | 85.0 | 20.0 | 10.5 |
| 13 | Graphite | 1.4 | Silicon | 8.5 | 85.9 | PEO | 0.1 | 1.0 | 10.0 | 10.0 | Graphite | 85.0 | 20.0 | 10.5 |
| 14 | Graphite | 2.95 | Silicon | 6.8 | 69.7 | PEO | 0.25 | 2.5 | 10.0 | 10.0 | Graphite | 85.0 | 20.0 | 10.5 |
| 15 | Graphite | 2.9 | Silicon | 7.0 | 70.7 | PEO | 0.1 | 1.0 | 10.0 | 12.5 | Graphite | 85.0 | 25.0 | 10.5 |
| 16 | Graphite | 2.9 | Silicon | 7.0 | 70.7 | PEO | 0.1 | 1.0 | 10.0 | 15.0 | Graphite | 85.0 | 30.0 | 10.5 |
| 17 | Graphite | 2.9 | Silicon | 7.0 | 70.7 | CMC | 0.1 | 1.0 | 10.0 | 10.0 | Graphite | 85.0 | 20.0 | 10.5 |

### [Table 2]

**Table 2**

| Experiment example | Corresponding pore size (µm) | Load retention rate (%) | | |
|---|---|---|---|---|
| | | 1.0 C | 1.5 C | 2.0 C |
| 1 | 2.6 | 93.0 | 91.0 | 88.0 |
| 2 | 3.0 | 90.0 | 88.0 | 85.0 |
| 3 | 2.8 | 92.0 | 90.0 | 87.0 |
| 4 | 2.6 | 93.0 | 91.0 | 88.0 |
| 5 | 2.0 | 95.0 | 93.0 | 90.0 |
| 6 | 1.5 | 96.0 | 94.0 | 91.0 |
| 7 | 1.0 | 96.5 | 94.5 | 91.5 |
| 8 | 2.6 | 94.0 | 92.0 | 89.0 |
| 9 | 2.6 | 91.0 | 89.0 | 86.0 |
| 10 | 2.4 | 92.0 | 90.0 | 87.0 |
| 11 | 2.0 | 90.0 | 88.0 | 85.0 |
| 12 | 2.6 | 91.0 | 89.0 | 86.0 |
| 13 | 2.6 | 90.0 | 88.0 | 85.0 |
| 14 | 2.6 | 90.0 | 88.0 | 85.0 |
| 15 | 3.2 | 89.0 | 87.0 | 84.0 |
| 16 | 3.7 | 87.0 | 85.0 | 82.0 |
| 17 | 2.6 | 86.0 | 84.0 | 81.0 |

### [Discussion]

As described in Tables 1 and 2, the load retention rate varied greatly depending on the configuration of the negative electrode 34, more specifically, the corresponding pore size. Specifically, in a case where the corresponding pore size was within a range from 1 µm to 3 µm both inclusive (Experiment examples 1 to 14), the load retention rate increased independently of the current value at the time of discharging, compared with a case where the corresponding pore size was outside the range from 1 µm to 3 µm both inclusive (Experiment examples 15 and 16). The result where the load retention rate increased as described above indicates that it was made easier for lithium ions to enter and exit the negative electrode 34.

In particular, the following tendencies were obtained in the case where the corresponding pore size was within the range from 1 µm to 3 µm both inclusive. Firstly, if the weight proportion R1 was within a range from 1.0 wt% to 2.5 wt% both inclusive, a high load retention rate was obtained. Secondly, if the weight proportion R2 was within a range from 60.6 wt% to 85.9 wt% both inclusive, a high load retention rate was obtained. Thirdly, if the median diameter D50 of the first negative electrode active material particles was within a range from 3.5 µm to 13.0 µm both inclusive and the median diameter D50 of the second negative electrode active material particles was within a range from 7.0 µm to 20.0 µm both inclusive, a high load retention rate was obtained. Fourthly, if the weight proportion R3 was within a range from 10.5 wt% to 42.1 wt% both inclusive, a high load retention rate was obtained.

Needless to say, in a case where the ion-conductive polymer compound (PEO) was used (Experiment example 1), the load retention rate increased greatly independently of the current value at the time of discharging, compared with a case where the non-ion-conductive polymer compound (CMC) was used (Experiment example 17).

### [Conclusion]

Based upon the results described in Tables 1 and 2, in a case where the negative electrode active material layer 34B having fine pores included the first negative electrode active material particles (the ion-conductive material, the carbon-containing particles, and the silicon-containing particles) and the second negative electrode active material particles, and where the corresponding pore size was within the range from 1 µm to 3 µm both inclusive, the load characteristic of the lithium-ion secondary battery improved. Accordingly, superior battery characteristics of the lithium-ion secondary batteries were obtained.

Although the technology has been described above with reference to some embodiments and Examples, embodiments of the technology are not limited to those described with reference to the embodiments and the Examples above and are modifiable in a variety of ways.

Specifically, although the description has been given of the cylindrical lithium-ion secondary battery and the laminated lithium-ion secondary battery, this is non-limiting. For example, the lithium-ion secondary battery may be of any other type such as a prismatic type or a coin type.

Moreover, although the description has been given of a case of the battery device having a wound structure, this is non-limiting. For example, the battery device may have any other structure such as a stacked structure.

Note that the effects described herein are mere examples, and effects of the technology are therefore not limited to those described herein. Accordingly, the technology may achieve any other effect.

## Claims

1. A lithium-ion secondary battery comprising:
a positive electrode;
a negative electrode that includes a negative electrode active material layer having fine pores, the negative electrode active material layer including first negative electrode active material particles and second negative electrode active material particles, the first negative electrode active material particles each including carbon-containing particles and silicon-containing particles in an ion-conductive material, the second negative electrode active material particles each including a carbon-containing material, a pore size that represents a peak of a volume fraction of an amount of mercury intruded into the fine pores falling within a range of greater than or equal to 1 micrometer and less than or equal to 3 micrometers; and
an electrolytic solution.

2. The lithium-ion secondary battery according to claim 1, wherein the ion-conductive material includes an ion-conductive polymer compound, a solid electrolyte, or both.

3. The lithium-ion secondary battery according to claim 1 or 2, wherein the ion-conductive material has ionic conductivity of greater than or equal to 10⁻⁶ siemens per centimeter and less than or equal to 10⁻¹ siemens per centimeter.

4. The lithium-ion secondary battery according to any one of claims 1 to 3, wherein a proportion of a weight of the ion-conductive material to a weight of the first negative electrode active material particles is greater than or equal to 1.0 weight percent and less than or equal to 2.5 weight percent.

5. The lithium-ion secondary battery according to any one of claims 1 to 4, wherein a proportion of a weight of the silicon-containing particles to a sum total of a weight of the carbon-containing particles and the weight of the silicon-containing particles is greater than or equal to 60.6 weight percent and less than or equal to 85.9 weight percent.

6. The lithium-ion secondary battery according to any one of claims 1 to 5, wherein
the first negative electrode active material particles have a median diameter D50 of greater than or equal to 3.5 micrometers and less than or equal to 13.0 micrometers, and
the second negative electrode active material particles have a median diameter D50 of greater than or equal to 7.0 micrometers and less than or equal to 20.0 micrometers.

7. The lithium-ion secondary battery according to any one of claims 1 to 6, wherein a proportion of a weight of the first negative electrode active material particles to a sum total of the weight of the first negative electrode active material particles and a weight of the second negative electrode active material particles is greater than or equal to 10.5 weight percent and less than or equal to 42.1 weight percent.

8. A negative electrode for a lithium-ion secondary battery, the negative electrode comprising
a negative electrode active material layer having fine pores, wherein
the negative electrode active material layer includes first negative electrode active material particles and second negative electrode active material particles,
the first negative electrode active material particles each include carbon-containing particles and silicon-containing particles in an ion-conductive material,
the second negative electrode active material particles each include a carbon-containing material, and
a pore size representing a peak of a volume fraction of an amount of mercury intruded into the fine pores falls within a range of greater than or equal to 1 micrometer and less than or equal to 3 micrometers.
